# EUROPEAN PATENT APPLICATION

(11) **EP 2 887 256 A1**
(43) Date of publication of application: **24.06.2015**
(21) Application number: 14198992.1
(22) Date of filing: 18.12.2014
(51) Int. Cl.: G06F 21/62, H04L 29/06

(54) **An apparatus for network bridging**

(30) Priority: 18.12.2013 GB 201322476
(71) Applicant: ContinuumBridge Limited, Bath BA1 1UD (GB)
(72) Inventor: Claydon, Anthony Peter John, Bath, BA1 1UD (GB); Sotheran, Martin William, Bath, BA1 1UD (GB)
(74) Representative: Thompson, Andrew John

(57) **Abstract**

An apparatus for providing a bridge between a plurality of devices and a network, the apparatus comprising: one or more device interfaces, arranged to provide a physical interface between the apparatus and said plurality of devices; one or more device adaptors, each device adaptor connected to one of said one or more device interfaces, and arranged to send and/or receive data to and/or from at least one of said plurality of devices; one or more apps, each app arranged to connect to at least one of said one or more device adaptors via one or more sockets, and arranged to send and/or receive said data to and/or from said at least one of said one or more device adaptors via the one or more sockets; and an apparatus controller arranged to receive permissions from a remote server over an external interface and establish said sockets based on said permissions such that said one or more apps may only establish a connection with designated device adaptors based on said permissions.

## Description

The present invention provides an apparatus for network bridging. In particular, the present invention provides and apparatus for providing a bridge between a plurality of devices and a network.

### Background to the Invention

Originally, the Internet was used to connect computers together. Applications that used the Internet were mainly concerned with activities such as file transfer, email and web browsing, all of which directly involve people. Today, the Internet is increasingly being used to connect "machines" to each other. This is sometimes known as machine-to-machine communication (M2M) or the Internet of Things (IoT). Many of these "machines" fall into two categories. Firstly, there are sensors. Examples of sensors include thermometers, light sensors, motion detectors, accelerometers and GPS receivers for determining location. Secondly, there are actuators. Examples of actuators include switches for switching lights or heating, visual displays and electronic locks.

At present, most of these sensors and actuators ("devices") exist in closed networks. For example, a security company may connect cameras, motion sensors and switches back to a control centre to determine if an intruder is in a building. Alternatively, a home owner may control lighting and heating in their own home. However, in the Internet of Things, many devices can be used for more than one purpose. The same sensors may be used for intruder detection, as well as to turn down the heating in rooms that are not occupied and to monitor the wellbeing of an occupant of a home if they are old or frail. When the same devices are used by more than one service provider organisation for different purposes, a number of potential conflicts arise. Firstly, when an aspect of control is involved, the different service providers must be prevented from sending conflicting control information. For example, maybe only one service provider should be allowed access to an actuator. Also, issues of security and privacy arise. Third parties may be able to access devices and use them for criminal purposes, or just for purposes that the owners of the sensors do not want to allow. Examples include criminals being able to access sensors in a home to determine whether the home is occupied or not, or determine patterns of occupation, or more benignly, using information for direct sales and marketing purposes.

Devices like those described above must be connected to computers on the Internet if they are to perform a useful function. Increasingly, devices in a local area, such as a home or office, incorporate some form of wireless connectivity, such as WiFi, ZigBee and Bluetooth 4.0, although some communicate using wired protocols such as Ethernet and USB.

Existing apparatus for connecting devices to the Internet fall into two broad categories. In the first type, data is obtained from local area interfaces, its format is converted and it is forwarded directly to other computers, often by means of a Wide Area Network (WAN). Similarly, the apparatus converts data that it receives from other computers into an appropriate format and routes it to the appropriate connected devices. In the second type of apparatus, data processing is performed locally on the apparatus, which may also be connected to other computers. The second method has the advantages of reducing how much data needs to be sent over the WAN and being more resilient to failures in the WAN and elsewhere. A problem with both methods is that it is difficult to securely share access to the devices between multiple service providers. In the first method, data can easily be routed to and from one service provider, but a method needs to be provided for the owner of the devices to route data selectively to multiple service providers. In the second method the local processing is almost always performed by software provided by a single service provider, who usually has provided all the devices as well as the apparatus for connecting them, hence not providing a method of sharing the access with other service providers.

### Summary of the Invention

The present invention overcomes limitations described above by enabling an owner of devices, or a party acting on behalf of the owner, to selectively provide access to the devices to different service providers, with each service provider providing a software application (an "app") that runs on the local bridge. These apps are configured only to have access to devices that the device owner has granted access to via one or more sockets controlled by a bridge manager, so as to provide a layer of security between apps and devices. Also the apps can communicate via a WAN with the service provider's computers. However, a given app may be prevented from knowing of the existence of other apps running on the same bridge.

According to a first aspect, the present invention provides an apparatus for providing a bridge between a plurality of devices and a network, the apparatus comprising: one or more device interfaces, arranged to provide a physical interface between the apparatus and said plurality of devices; one or more device adaptors, each device adaptor connected to one of said one or more device interfaces, and arranged to send and/or receive data to and/or from at least one of said plurality of devices; one or more apps, each app arranged to connect to at least one of said one or more device adaptors via one or more sockets, and arranged to send and/or receive said data to and/or from said at least one of said one or more device adaptors via the one or more sockets; and an apparatus controller arranged to receive permissions from a remote server over an external interface and establish said sockets based on said permissions such that said one or more apps may only establish a connection with designated device adaptors based on said permissions.

According to a second aspect, the present invention provides an apparatus for providing a bridge between a plurality of devices and a network, the apparatus comprising: one or more device interfaces, arranged to provide a physical interface between the bridge and said plurality of devices; one or more device adaptors, each device adaptor connected to one of said one or more device interfaces, and arranged to send and/or receive device specific raw data to and/or from at least one of said plurality of devices, and to convert said device specific raw data to data having one of a plurality of predetermined formats; and one or more apps, each app arranged to connect to at least one of said one or more device adaptors, and arranged to send and/or receive said data having one of said predetermined formats to and/or from said at least one of said one or more device adaptors.

According to a third aspect, the present invention provides an apparatus for providing a bridge between a plurality of devices and a network, the apparatus comprising: one or more device interfaces, arranged to provide a physical interface between the apparatus and said plurality of devices; and one or more device adaptors, each device adaptor connected to one of said one or more device interfaces, and arranged to send and/or receive data to and/or from at least one of said plurality of devices; wherein each of said one or more device adaptors is arranged to connect to one or more apps and arranged to send and/or receive said data to and/or from said one or more apps; and the apparatus is arranged such that said one or more apps may only establish a connection with designated device adaptors.

According to a fourth aspect, the present invention provides an apparatus for providing a bridge between a plurality of devices and a network, the apparatus comprising: one or more device interfaces, arranged to provide a physical interface between the bridge and said plurality of devices; and one or more device adaptors, each device adaptor connected to one of said one or more device interfaces, and arranged to send and/or receive device specific raw data to and/or from at least one of said plurality of devices, and to convert said device specific raw data to data having one of a plurality of predetermined formats; wherein each of said one or more device adaptors arranged to connect to one or more apps, and arranged to send and/or receive said data having one of said predetermined formats to and/or from said one or more apps.

Further features of the present invention are recited in the appended claims.

### Brief Description of the Drawings

Embodiments of the present invention will now be described by way of example only, and with reference to the accompanying drawings, in which:

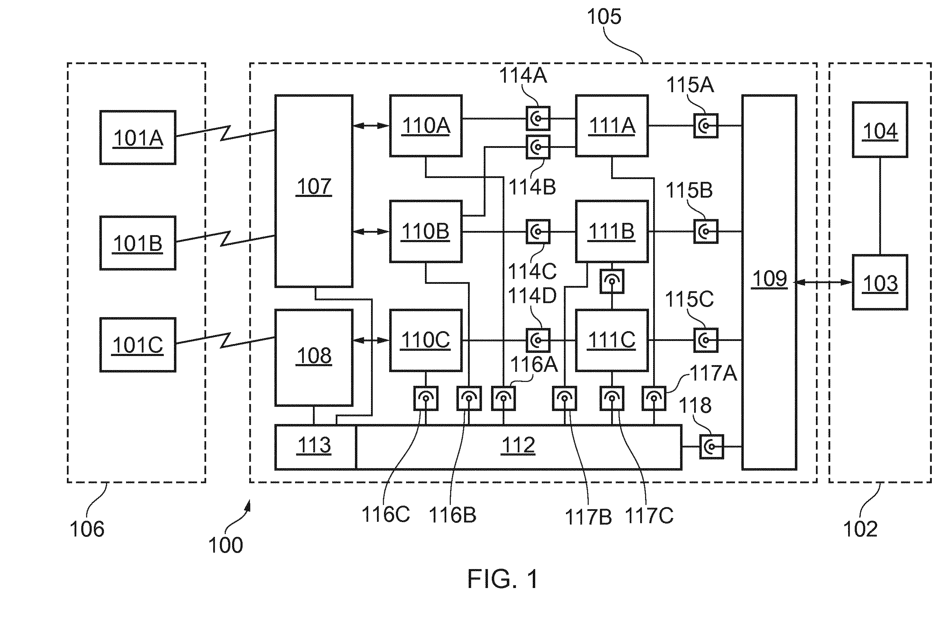

Figure 1 is schematic diagram of a network in accordance with an embodiment of the present invention.

### Detailed Description of Embodiments of the Invention

Figure 1 shows a network 100 in accordance with an embodiment of the present invention. The network 100 includes a number of devices 101A, 101 B, 101C. These devices may be sensors, such as temperature or movement sensors. Alternatively, these devices may be actuators, such as light switches. The network 100 also includes a Wide Area Network 102 which includes the Internet 103, and a remote server 104. The network 100 may include several remote servers, but for the purpose of this embodiment, a single server is described. The network 100 also includes a network bridge 105. The network bridge 105 is for connecting devices 101A, 101B, 101C in a local area network 106 to remote server 104 via WAN 102.

The network bridge 105 may include wireless and wired local area interfaces. In this example, the network bridge includes a Bluetooth Low Energy (BLE) interface 107 and a WiFi interface 108. In this example, devices 101A and 101B are BLE devices, and device 101C is a WiFi device. Each interface includes one or more antennas (not shown) as appropriate.

The network bridge 105 also includes a concentrator 109. The concentrator 109 provides an interface between the various components of the network bridge 105 and the WAN 102. For example, the concentrator 109 may include a direct connection to a digital subscriber line (eg: ADSL) or to an optical fibre connection. Alternatively, the concentrator may include an Ethernet or WiFi interface to a WAN gateway. As a further alternative, the WAN connection may be a wide area wireless connection, possibly provided by a mobile network operator. For the purposes of this example, any one of these connections is possible. The concentrator therefore enables the bridge 105 to connect to the remote server 104 via the Internet 103. In this example, concentrator 109 uses authentication while it is communicating with the remote server 104 to ensure that it is communicating with the correct server. This is to enable a secure end-to-end connection.

The network bridge 105 also includes device adaptors 110A, 110B and 11C. In particular, the network bridge 105 includes one device adaptor for each device to which it requires a connection. In the present case, the network bridge 105 includes three adaptors; one for each of the three devices. In particular, device adaptor 110A is for device 101A, device adaptor 110B is for device 101B, and device adaptor 110C is for device 101C.

The network bridge 105 also includes apps 111A, 111B and 111C. Each app is arranged to provide an interface between one or more the devices 101A, 101B and 101C and remote server 104 based services. In this regards, each app 111A, 111B, 111C is connected to one or more of the device adaptors 110A, 110B, 110C in a manner that will be described in more details below. Furthermore, each app 111A, 111B, 111C is connected to the concentrator 109, as will be described below. As the apps can only access the WAN and hence the Internet via concentrator 109, which in turn uses a secure, authenticated connection, protection is provided against apps accessing unauthorised locations on the Internet.

The network bridge 105 also includes a bridge manager 112. The bridge manager controls, amongst other things, the connections between the device adaptors 110A, 110B, 110C and the apps 111A, 111B, 111C. Accordingly, the bridge manager 112 is able to control which apps connect to which devices, as will be described in more detail below. The bridge manager 112 is also connected to the concentrator 109 so that it may also connect to the remote server 104. The bridge manager 112 may be programmed locally by a user, or via the Internet 103 by means of server 104.

All communications between the device adaptors, the apps and the concentrator takes place by means of sockets. In this example, app 111A is connected to device adaptor 110A by socket 114A, app 111A is connected to device adaptor 110B by socket 114B, app 111B is connected to device adaptor 110B by socket 114C, and app 111C is connected to device adaptor 110C by socket 114D. App 111A is connected to the concentrator 109 by socket 115A, app 111B is connected to the concentrator 109 by socket 115B, and app 111C is connected to the concentrator 109 by socket 115C.

The sockets that enable communication between the apps and the device adaptors are collectively referred to as a router. In this sense, the router is able to direct traffic between different apps and device adaptors, under the control of the bridge manager 112. In particular, although it is technically possible for traffic to be routed between any app and any device adaptor, for security purposes, only certain routes are allowed, as will be described in more detail below.

In addition to the above, the bridge manager 112 is also connected to the device adaptors, the apps and the concentrator using sockets. In this example, the bridge manager 112 is connected to device adaptor 110A by socket 116A, to device adaptor 110B by socket 116B, and to device adaptor 110C by socket 116C. Furthermore, the bridge manager 112 is connected to app 111 A by socket 117A, to app 111B by socket 117B, and to app 111C by socket 117C. In addition, the bridge manager 112 is connected to the concentrator by socket 118.

The sockets are preferably Unix Domain Sockets (UDS). UDSs use the file system as their name space. The file system may be used to restrict access to the sockets, for example by setting user and group permissions on the file objects that represent the sockets or the directories that contain the sockets. Alternatively, one or more of the sockets comprise a physical multiplexer or a network socket such as an Internet Protocol (IP) socket.

The network bridge 105 also includes a discovery module 113. The discovery module may be part of the bridge manager 112. The discovery module 113 is connected to the interfaces 107, 108. The discovery module 113 is used to identify potential new devices that can be connected to the bridge 105.

In the above described embodiment, all the elements of the network bridge 105 are executed in software on a microprocessor. Furthermore, the microprocessor is preferably arranged to execute an operating system, which is preferably Linux or some other POSIX-compliant operating system. However, entities such as the LAN interfaces and the WAN interface will depend on underlying hardware to implement at least parts of their physical layers.

Each device adaptor 110A, 110B, 110C and each app 111 A, 111B, 111C is arranged to run in its own virtual machine. For example, a Linux Container (LXC). A Linux Container provides a "light-weight" virtualisation of one instance of an operating system running on another. This means that the virtual machine can share the same executable code as the host machine, but access can be restricted to a limited subset of the operating system. In particular, the virtual machine can be prevented from accessing almost all shared resources, and access to persistent storage can be limited to certain directories or certain disc partitions, most likely one partition. In this example, BLE device adaptors 110A, 110B are allowed access to Bluetooth device drivers in the operating system kernel. WiFi device adaptor 110C is allowed access to WiFi device drivers. Preferably, the Linux Containers that run device adaptors and apps are restricted to accessing certain sockets or the directories that contain the sockets.

The bridge manager 112 is responsible for setting up the Linux Containers for all the device adaptors and apps and for causing the device adaptors and apps to be executed within these containers. As noted above, the bridge manager 112 is connected to the device adaptors and apps using a number of sockets. The bridge manager 112 uses these connections to start and stop the apps and the device adaptors. The bridge manager also provides the apps and the device adaptors with information about socket locations to enable the apps and the device adaptors to communicate with other entities.

All of the aforementioned sockets may be created by the bridge manager 112 or by either the apps, the device adaptors or the concentrator to which they are connected. In this example, app 111A is connected to device adaptor 110A and device adaptor 110B. Thus, app 111A has the potential to communicate with device 101A and device 101B. Similarly, app 111B can communicate with device 101B via device adaptor 110B and app 111C can communicate with device 101C via device adaptor 110C. As each app 111 A, 111B, 111C communicates with the concentrator 109 via a different socket, it is not possible for apps to communicate with each other or know of each other's existence.

Under the control of the bridge manager 112, new device adaptors may be loaded that connect to devices that have been added to the network 100 and adaptors may be removed when corresponding devices already present on the network 100 are removed. In the same way, apps can be added and removed alongside their corresponding connections established with device adaptors. In a preferred embodiment, the bridge manager 112 may update the configuration of apps and device adaptors while they are operating, so that new connections can be made without having to halt the operation of any of the elements of the network bridge 100. These changes happen when the bridge manager 112 is notified of changed user requirements.

The device adaptors 110A, 110B, 110C each includes an Application Programming Interface (API). Each app 111A, 111B, 111C is programmed to recognise the APIs of the device adaptors with which they are arranged to communicate with. In particular, the device adaptors grouped together is classes that correspond to device classes. For example, all thermometers may be provided in a thermometer class, and all thermometer device adaptors with include a thermometer API. This means that any apps that are arranged to gather temperature information will know that the device adaptors includes the same API. The devices generate raw temperature data. This is converted to a common format (for example temperature in degrees Celsius) by the device adaptor, which is then presented to the apps using the thermometer API. The table below shows examples of characteristics that may be conveyed using this API.

| **Characteristic** | **Unit/Type** | **Description** |
|---|---|---|
| temperature | Celcius/float | Temperature |
| humidity | Percent/float | Relative humidity |
| pressure | Bar/float | Atmospheric pressure |
| luminance | Lux/float | Luminance |
| battery | Percent/float | Battery status as a percentage of fully-charged |
| binary_sensor | -/string | Can take the values "on" and "off" |
| switch | -/string | Can take the values "on" and "off" |
| connected | -/Boolean | Indicates whether a device is currently connected |
| voltage | Volt/float | Voltage |
| current | Ampere/float | Current |
| power | Watt/float | Power |
| energy | KJ/float | Energy |
| buttons | -/dict | The states of a group of buttons in the form: { "1": "string", "2": "string" } The string can take the values "on" or "off". There may be one or more buttons. |

In this manner, the apps do not need to be written to interpret the raw data from the devices, thus separating the functions of devices from the functions of apps and making it possible for developers to write apps without any knowledge of how the devices they are using are connected. When an app requires temperature information, it may requests the current temperature that is indicated by a thermometer. The device adaptor may then accesses its associated device over a LAN, and convert the temperature to degrees Celsius and return the value to the app, along with a time stamp. As an alternative, the device adaptor may access its associated device over a LAN at regular intervals and provide the most recent value to the app. As another alternative, devices may send information to the device adaptor when it becomes available (for example, when movement is detected) and this is passed on to apps that are connected to the device adaptor.

In the present example, devices 101A and 101C are class one devices, and device 101 B is a class two device. Accordingly, device adaptors 110A and 110C include class one APIs and device adaptor 110B includes a class two API.

An advantage of this embodiment of the invention is that each device adaptor and each app may be provided by different organisations. For example, the manufacturers of devices may provide device adaptors with predetermined APIs for particular classes of device. Service providers in fields such as energy management, security and health may provide apps to provide different services. So long as the device manufacturers and the service providers use the commonly agreed APIs, then the apps and device adaptors are compatible with each other.

In a preferred embodiment, all communication between apps and device drivers is performed using Javascript Object Notation (JSON).

As described above, each app 111A, 111B, 111C communicates with the concentrator 109 by means of a socket 115A, 115B, 115C. The bridge manager 112 also communicates with the concentrator using socket 118. The concentrator routes data going to and from the WAN 102 to the correct place. In this embodiment, communications between the concentrator and the apps, and between the concentrator 109 and the bridge manager 112, is performed using the HTTPS protocol. In addition, in the preferred embodiment, all data going to and from the bridge originates and terminates at one location, which may be a server or virtual server that is connected to the Internet. This server can then further route data from each app and the bridge manager onwards to other locations over secure connections.

The majority of apps are only able to connect to designated device adaptors. However, certain apps may connect to other apps, via shared sockets, in the same way that they are connected to device adaptors. For example, if one app provides data that may be useful employed by another app. alternatively, it may be desirable for a first app to communicate with a second app and a third app, if the purpose of the first app was to determine whether there were people in a room by means of using a plurality of sensors. The first app may then control the second app to control lighting or heating and the third app to control the security system. In Figure 1, a connection is shown between app 111B and app 111C, using socket 119. This enables two-way communication between these apps.

In the above described embodiment, the network bridge 105 generally connects one device adaptor to one device. However, one device may include several sensors or actuators. For example, a fridge may include temperature and door sensors, as well as a display.

In an alternative embodiment, two device adaptors may access the same device. For example, for a particular device, the manufacturer may have developed a device adaptor, and a third party may have developed an alternative adaptor.

There is therefore described an apparatus that can connect to multiple devices over local area networks, associate a device adaptor with each device, allow apps running on the apparatus to access the devices via the device drivers and communicate onwards with other computers that are connected to the Internet. All this is performed in a manner such that privacy and security can be maintained. An advantage of the present invention is that services and devices are connected securely enabling the owners of the devices to maintain privacy and control of which third parties have access to their devices.

In the above described embodiments, the LAN interfaces includes BLE and WiFi interfaces. Examples of other interfaces include the ZigBee interface, Z-Wave, USB and Remote Keyless Systems and other systems using the LPC433 band.

An exemplary embodiment of the present invention will now be described. Referring to Figure 1, in one embodiment, the bridge may be used in a patient care environment, in particular a home care environment. In such circumstances, device 101 A may be a door sensor for sensing door movement in the home, device 101B may be an oven sensor sensing when a patient's oven is used, and device 101C may be a blood pressure monitor for monitoring the blood pressure of the patient. The apps 103 may then include a home security app, a patient care/doctor app and an insurance company app. Each of the apps may have varying permissions set by a user and stored in the remote server 104. For example, it may be desirable to grant the insurance company access to the door and oven sensors, but not to the blood pressure monitor, whereas the doctor may require access to the blood pressure monitor and nothing else. Additionally, it may be desirable for the insurance app not to have knowledge of the patient care app. It may also be desirable for the insurance company to have knowledge of the home security app. By providing a permissions layer in the form of sockets controllable via a bridge manager, access to devices in the local network can be easily controlled and adjusted depending on the requirements of the system and preferences of an administrator.

There follows a list of numbered clauses defining particular embodiments of the invention. Where a numbered clause refers to an earlier numbered clause then those clauses may be considered in combination.
1. An apparatus for providing a bridge between a plurality of devices and a network, the apparatus comprising:
   one or more device interfaces, arranged to provide a physical interface between the apparatus and said plurality of devices;
   one or more device adaptors, each device adaptor connected to one of said one or more device interfaces, and arranged to send and/or receive data to and/or from at least one of said plurality of devices; and
   one or more apps, each app arranged to connect to at least one of said one or more device adaptors, and arranged to send and/or receive said data to and/or from said at least one of said one or more device adaptors; wherein
   the apparatus is arranged such that said one or more apps may only establish a connection with designated device adaptors.
2. An apparatus according to clause 1, wherein each of said one or more apps is arranged to connect to at least one of said one or more device adapters via one or more sockets.
3. An apparatus according to clause 2, wherein access to each of said one or more sockets controlled by permissions.
4. An apparatus according to clause 3, wherein each of said one or more sockets is represented by a file object and said permissions are on the file object or on a directory that contains the socket.
5. An apparatus according to any of clauses 2 to 4, wherein the sockets are Unix Domain Sockets.
6. An apparatus according to any preceding clause, wherein each of said one or more apps is executed in a virtual machine.
7. An apparatus according to clause 6, wherein each of said one or more device adaptors is executed in a virtual machine.
8. An apparatus according to clauses 6 or 7, wherein the virtual machines are Linux Containers.
9. An apparatus according to any of clauses 6 to 8, further comprising an apparatus controller, wherein said apparatus controller is arranged to establish said virtual machines.
10. An apparatus according to any of clauses 2 to 5, further comprising an apparatus controller, wherein said apparatus controller is arranged to establish said sockets.
11. An apparatus according to any preceding clause, wherein at least one of said one or more apps is arranged to connect to another of said one or more apps, and arranged to send and/or receive said data to and/or from said another of said one or more apps.
12. An apparatus according to clause 11, wherein said at least one of said one or more apps is arranged to connect to said another of said one or more apps via one or more sockets.
13. An apparatus according to clause 12, wherein access to each of said one or more sockets controlled by permissions.
14. An apparatus according to clause 13, wherein each of said one or more sockets is represented by a file object and said permissions are on the file object or on a directory that contains the socket.
15. An apparatus according to any of clauses 12 to 14, wherein the sockets are Unix Domain Sockets.
16. An apparatus according to any preceding clause, further comprising a concentrator, arranged to communicate with a server over an external interface, and to enable communication of information between the apps and said server.
17. An apparatus for providing a bridge between a plurality of devices and a network, the apparatus comprising:
   one or more device interfaces, arranged to provide a physical interface between the bridge and said plurality of devices;
   one or more device adaptors, each device adaptor connected to one of said one or more device interfaces, and arranged to send and/or receive device specific raw data to and/or from at least one of said plurality of devices, and to convert said device specific raw data to data having one of a plurality of predetermined formats; and
   one or more apps, each app arranged to connect to at least one of said one or more device adaptors, and arranged to send and/or receive said data having one of said predetermined formats to and/or from said at least one of said one or more device adaptors.
18. An apparatus according to clause 17, wherein each of said predetermined formats is common to a particular class of devices.
19. An apparatus according to clause 18, wherein all device adaptors in a given class use a common application programming interface (API).
20. An apparatus for providing a bridge between a plurality of devices and a network, the apparatus comprising:
   one or more device interfaces, arranged to provide a physical interface between the apparatus and said plurality of devices; and
   one or more device adaptors, each device adaptor connected to one of said one or more device interfaces, and arranged to send and/or receive data to and/or from at least one of said plurality of devices; wherein
   each of said one or more device adaptors is arranged to connect to one or more apps and arranged to send and/or receive said data to and/or from said one or more apps;and
   the apparatus is arranged such that said one or more apps may only establish a connection with designated device adaptors.
21. An apparatus for providing a bridge between a plurality of devices and a network, the apparatus comprising:
   one or more device interfaces, arranged to provide a physical interface between the bridge and said plurality of devices; and
   one or more device adaptors, each device adaptor connected to one of said one or more device interfaces, and arranged to send and/or receive device specific raw data to and/or from at least one of said plurality of devices, and to convert said device specific raw data to data having one of a plurality of predetermined formats; wherein
   each of said one or more device adaptors arranged to connect to one or more apps, and arranged to send and/or receive said data having one of said predetermined formats to and/or from said one or more apps.

## Claims

1. An apparatus for providing a bridge between a plurality of devices and a network, the apparatus comprising:
one or more device interfaces, arranged to provide a physical interface between the apparatus and said plurality of devices;
one or more device adaptors, each device adaptor connected to one of said one or more device interfaces, and arranged to send and/or receive data to and/or from at least one of said plurality of devices;
one or more apps, each app arranged to connect to at least one of said one or more device adaptors via one or more sockets, and arranged to send and/or receive said data to and/or from said at least one of said one or more device adaptors via the one or more sockets; and
an apparatus controller arranged to receive permissions from a remote server over an external interface and establish said sockets based on said permissions such that said one or more apps may only establish a connection with designated device adaptors based on said permissions.

2. An apparatus according to claim 1, wherein each of said one or more sockets is represented by a file object and said permissions are on the file object or on a directory that contains the socket.

3. An apparatus according to any preceding claim, wherein each of said one or more apps is executed in a virtual machine.

4. An apparatus according to claim 3, wherein each of said one or more device adaptors is executed in a virtual machine.

5. An apparatus according to claims 3 or 4, wherein the virtual machines are Linux Containers.

6. An apparatus according to any of claims 3 to 5, wherein said apparatus controller is arranged to establish said virtual machines.

7. An apparatus according to any preceding claim, wherein at least one of said one or more apps is arranged to connect to another of said one or more apps, and arranged to send and/or receive said data to and/or from said another of said one or more apps.

8. An apparatus according to claim 7, wherein said at least one of said one or more apps is arranged to connect to said another of said one or more apps via one or more sockets established by the apparatus controller and controlled by said permissions.

9. An apparatus according to claim 8, wherein each of said one or more sockets is represented by a file object and said permissions are on the file object or on a directory that contains the socket.

10. An apparatus according to any preceding claim, wherein the sockets are Unix Domain Sockets.

11. An apparatus according to any preceding claim, further comprising a concentrator, arranged to communicate with the remote server over the external interface so as to enable communication of information between the apps and the remote server.

12. An apparatus according to any preceding claim, wherein:
each device adaptor is arranged to send and/or receive device specific raw data to and/or from at least one of said plurality of devices, and to convert said device specific raw data to data having one of a plurality of predetermined formats; and
each app arranged to connect to at least one of said one or more device adaptors, and arranged to send and/or receive said data having one of said predetermined formats to and/or from said at least one of said one or more device adaptors.

13. An apparatus according to claim 12, wherein each of said predetermined formats is common to a particular class of devices.

14. An apparatus according to claim 13, wherein all device adaptors in a given class use a common application programming interface (API).
